(19) Europäisches Patentamt
European Patent Office
Office européen des brevets

(11) **EP 2 441 165 B1**

(12) **EUROPEAN PATENT SPECIFICATION**

(45) Date of publication and mention
of the grant of the patent:
**10.10.2018 Bulletin 2018/41**

(51) Int Cl.:
***H02M 5/257*** *(2006.01)*

(21) Application number: **10731778.6**

(22) Date of filing: **11.06.2010**

(86) International application number:
**PCT/GB2010/001147**

(87) International publication number:
**WO 2010/142961 (16.12.2010 Gazette 2010/50)**

(54) **IMPROVEMENTS IN THE DISTRIBUTION AND UTILISATION OF ELECTRICAL ENERGY IN INDUSTRIAL PROCESSES**

VERBESSERUNGEN BEI DER VERTEILUNG UND NUTZUNG VON STROM BEI INDUSTRIELLEN VERFAHREN

AMÉLIORATIONS APPORTÉES À LA DISTRIBUTION ET À L'UTILISATION D'ÉNERGIE ÉLECTRIQUE DANS DES PROCESSUS INDUSTRIELS

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.06.2009 GB 0910141**

(43) Date of publication of application:
**18.04.2012 Bulletin 2012/16**

(73) Proprietor: **Eurotherm B.V.**
**2404 Alphen aan den Rijn (NL)**

(72) Inventors:
• **LEVEL, Yves**
**F-69390 Vernaison (FR)**

• **LEDEE, Gérard, Pierre, Louis**
**F-69890 La Tour de Salvagny (FR)**
• **COTTAM, Joe**
**F-69390 Vernaison (FR)**

(74) Representative: **Friese Goeden Patentanwälte PartGmbB**
**Widenmayerstraße 49**
**80538 München (DE)**

(56) References cited:
**EP-A1- 0 889 674     JP-A- 4 064 205**
**US-A- 5 119 012**

# Description

## CROSS-REFERENCE TO RELATED APPLICATIONS

This patent application claims the benefit of a patent application filed in the Intellectual Property Office of the United Kingdom June 12, 2009, application number GB 0910141.1, entitled "Improvements in the Distribution and Utilisation of Electrical Energy in Industrial Processes."

## BACKGROUND

Industrial processes may consume substantial quantities of electrical power. This quantity of electrical power may accumulate to a noteworthy cost of production. Thus, equipment for controlling and managing electrical power distribution within an enterprise is a subject for technical innovation and research and development efforts. The document US5,119,012 discloses a load tap changer with a plurality of solid state switches to control its operation.

## SUMMARY

In an embodiment, a system for distribution of electrical energy to a load is disclosed. The system comprises a load tap changer to distribute electrical energy to the load, wherein the load tap changer is controllable for operation in either phase angle firing operation mode or full cycle firing operation mode. The system also comprises a memory storing an electrical energy distribution strategy and a central unit that commands the load tap changer to change between phase angle firing operation mode and full cycle firing operation mode in accordance with the electrical energy distribution strategy.

In an embodiment, a system for distribution of electrical power to a load is disclosed. The system comprises a load tap changer to distribute electrical power to the load, wherein the load tap changer is controllable for operation in either phase angle operation mode or full cycle firing operation mode. The system also comprises a memory storing a dynamic closed loop control strategy and a central unit that receives a command input, receives feedback from the load, determines a command based on the command input and the feedback in accordance with the strategy stored in memory, and commands the load tap changer to change between phase angle firing operation mode and full cycle firing operation mode.

In an embodiment, a method of distributing electrical power to a load is disclosed. The method comprises determining by a central unit a power to distribute to a load and commanding by the central unit a load tap changer to one of a phase angle firing operation mode and a full cycle firing operation mode based on the temporal distribution of power, wherein the power is distributed to the load.

These and other features will be more clearly understood from the following detailed description taken in conjunction with the accompanying drawings and claims.

## BRIEF DESCRIPTION OF THE DRAWINGS

For a more complete understanding of the present disclosure, reference is now made to the following brief description, taken in connection with the accompanying drawings and detailed description, wherein like reference numerals represent like parts.

Fig. 1 shows diagrammatically the structure of an energy distribution system useful for understanding the invention, hereinafter referred to as EPower system.

Figs 2a, 2b and 2c show diagrammatically the general appearance of an electrical signal intended to be output by a generator in a modulation period.

Fig. 3 represents diagrammatically the general appearance of the superposition of two electrical signals in the same modulation period.

Fig. 4 shows the successive steps of a method of determination of an energy distribution in accordance with one possible embodiment of the EPower system.

Figs 5, 6, 7, 8a and 8b show diagrammatically different possible configurations of superposition of electrical signals during the application of the method from Fig. 4.

Fig. 9a shows a non-optimum distribution of a plurality of electrical signals in the same modulation period.

Fig. 9b shows a non-optimum distribution of a plurality of electrical signals in the same modulation period, after application of a reduction factor in accordance with the EPower system.

Fig. 10a shows an optimum distribution of a plurality of electrical signals in the same modulation period after application of the method from Fig. 4.

Fig. 10b shows an optimum distribution of a plurality of electrical signals in the same modulation period, after application of the method from Fig. 4 and the reduction factor.

Fig. 11 shows a chart of waveforms and a power factor chart.

Fig. 12 shows a load tap changer schematic, a plurality of waveforms, and power factor chart according to the invention.

Fig. 13 shows a plurality of waveforms according to the invention.

Fig. 14 shows a waveform and a bar chart.

Fig. 15 shows a bar chart and a plurality of histograms.

Fig. 16 shows the application of burst to phase angle switching (and vice versa) when the power given to the load overtake a settable value.

## DETAILED DESCRIPTION

It should be understood at the outset that although illustrative implementations of one or more embodiments are illustrated below, the disclosed systems and methods may be implemented using any number of techniques, whether currently known or in existence. The disclosure should in no way be limited to the illustrative implementations, drawings, and techniques illustrated below, but may be modified within the scope of the appended claims along with their full scope of equivalents.

Improvements in the distribution and utilization of electrical energy in industrial processes are disclosed herein. These teachings may be applied to industrial heating applications and particularly but not exclusively be applied to heating processes in the manufacture of glass and glass products. Application of these teachings to a variety of manufacturing processes is contemplated including fabrication of glass fiber for fiber optic communication applications, fabrication of polysilicon ingots to be sliced into wafers for use in photo power cells, and others. The teachings may be used to control lighting. Yet other applications will readily occur to those skilled in the art.

An aspect of the present disclosure is directed to commanding a load tap changer (LTC) to change from a phase angle firing mode of operation to a full cycle firing mode (also known as a burst firing mode) of operation and from the full cycle firing mode of operation to the phase angle firing mode of operation. The load tap changer may be operated to control power delivery to a load, for example an oven or other consumer of electrical power. The load tap changer may be operated in a phase angle firing mode of operation while warming up a device, for example a draw plate of a fiber optic bushing. By changing the phase angle of firing of a solid state switch coupling the various taps to the load, for example a thyristor or a silicon controlled rectifier (SCR), the load can be warmed up gradually, thereby avoiding thermal shock to the load. It is known that some electrical loads may exhibit variable temperature resistance, such that at different temperatures the load may have different resistance. A load having low resistance when cold may be damaged by a sudden in-rush of electrical current if electrical power delivery is not managed to gradually increase the temperature of the load. In the case of platinum fiber optic bushings, for example, thermal shock may break the bushings, resulting in high costs associated with the losses. Once the subject load has been warmed up, the load tap changer may be switched to full cycle firing mode. Operating a load tap controller in a full cycle firing mode may provide a number of power control benefits including reduced induction of harmonics on the power mains and improved power factor, both of which can reduce electric power consumption costs to a plant operator.

Switching from phase angle firing mode to full cycle firing mode and operating in full cycle firing mode may present some challenges of controlling the solid state switches. Changing and/or adjusting the control inputs to the solid state switches may be referred to as gating. It is desirable to avoid gating transition lapses that may result in transient short circuits across the solid state switches. Such short circuits, even if of short time duration, may blow fuses in the load tap changer and result in equipment downtime and/or scrapped materials. In an embodiment, a software and/or firmware solution is thought to provide a more reliable and robust gating control strategy.

In an embodiment, a gating software process that controls the switches of the load tap changer may be phase locked to the frequency of the power mains and execute iteratively. In some contexts, this may be referred to as synchronizing the gating process to the power mains, and the gating process may be said to be synchronized to the power mains or synched to the power mains. Correct synchronization of the gating software process allows the gating process to provide robust and precise gating, eliminating or reducing the frequency of occurrence of transient short circuits. To achieve synchronization, the gating software process may execute or invoke a strategy for estimating a zero crossing point or zero crossing time of the power mains (the point or time in the power mains cycle that the voltage assumes a zero value twice per cycle) based on measuring the voltage of the power mains periodically.

It is to be noted that the measured wave of the power mains may differ from an ideal sinusoidal wave in a number of significant ways. The amplitude and frequency of the power mains may differ from a nominal value and may differ over time. The power mains may not achieve a 50/50 mark space ratio that is the duration of time of a positive portion of the power mains waveform may not be equal to the duration of time of a negative portion of the power mains waveform. Additionally, the power mains waveform may not have the shape of a true sinusoid and may be distorted from the shape of a true sinusoid waveform. The power mains may comprise harmonics of the nominal power mains frequency each having various amplitudes superimposed over the nominal power mains frequency sinusoid. The power mains may comprise noise and/or discontinuities that may cross through zero, which it is desirable to discount when determining the zero crossing time of the power mains. Consequently, in an embodiment, the zero crossing estimation strategy may not rely upon the power mains conforming to an ideal sinusoid at the nominal power mains frequency, for example an ideal sinusoid of 50 Hz or of 60 Hz. In an embodiment, the zero crossing estimation strategy determines an estimate of the zero crossing time twice per period of the power mains.

In order that the gating software may phase lock to the power mains correctly, the zero crossing time determination strategy may be designed to accurately estimate the zero crossing time of the power mains notwithstanding such deviations of the power mains from an ideal sinusoid of nominal frequency. Because the zero crossing time may not line up precisely with the sampling of power mains voltage, the zero crossing estimation strategy executed by the gating software process may estimate or project the precise zero crossing time based on a linear extrapolation, a quadratic extrapolation, or some other polynomial extrapolation method. Because noise exists and/or other discontinuities may be present in the power mains, the sampling of the power mains voltage may be processed by a digital filter, for example a low pass finite impulse response (FIR) digital filter, to attenuate this noise and/or to attenuate transients that may be associated with discontinuities before applying the strategy to estimate the zero crossing time. In an embodiment, the voltage mains may be sensed and/or measured and analog to digital converted about every 12.5 $\mu$S; these measurements may be accumulated into a averaged value about every 50 $\mu$S (4 samples are averaged); these averaged values are down-sampled into 200 $\mu$S samples (4-times down sampling). It is the 200 $\mu$S samples that are employed by the FIR filter that runs at a 200 $\mu$S sampling rate. This rate of FIR filter allows the number of taps (coefficients) of the FIR filter to be reduced. In an embodiment, a FIR filter employing 42 taps is employed. In another embodiment, however, different power mains voltage sampling and filtering may be employed. The gating strategy may employ the estimation of the zero crossing time in combination with an expected processor interrupt latency to control the gating of the solid state switches.

An associated company of the present applicants have developed a new electrical power control system referred to herein as EPower which is incorporated herein and fully described below, and is the subject of co-pending European patent application published as EP 1 837 984.

The EPower system concerns a method of determination of an energy distribution to a plurality of electrical loads during a modulation period, that energy coming from at least one generator. The EPower system also concerns an energy distribution system adapted to implement that method.

If the supply of a predetermined quantity of electrical energy to any one of the electrical loads during this modulation period is effected by the generator emitting during a predetermined fraction of the modulation period an electrical signal the power whereof corresponds to that of this electrical load, it is known to use a method including a temporal distribution of the electrical signals sent by the generator in the modulation period in accordance with a predetermined distribution criterion.

For an alternating current energy distribution application, the electrical signals emitted by the generator are more particularly wave streams. In direct current, they may take any other form.

For example, in the European patent granted under the number EP 0 710 051, there is provision for using a method which, by successive slippages of wave streams relative to each other, enables, at the end of a certain number of modulation periods, convergence toward a more regular distribution of the instantaneous power emitted by the generator to supply the electrical loads.

According to the above patent, the calculations to be effected to converge toward this best temporal distribution of the wave streams are simple, but at the cost of a convergence that is slow.

Thus, it is preferable to use methods the convergence whereof is fast, or even instantaneous. This is, for example, the case of the method used by the energy distribution system marketed by the company Eurotherm Automation for more than twenty years under the name "483". That system effects a temporal distribution of the electrical signals emitted by the generator in a modulation period in accordance with a distribution criterion determined as a function of the electrical signals and applied successively to each electrical signal in this same modulation period. More precisely, the distribution criterion is linked to the number of electrical signals to be distributed in the modulation period that is to say to the number of electrical loads that have to be supplied with energy during that modulation period. According to this criterion, the modulation period is divided into as many time intervals of the same length as there are electrical signals to be transmitted and the rising edge of an electrical signal is transmitted at the beginning of each interval. The consequence of this is a regular temporal distribution of the rising edges of the electrical signals to be emitted.

As a result of this, a relatively good temporal distribution of the electrical signals emitted by the generator is obtained instantaneously, that is to say in a single modulation period. Nevertheless this distribution is not the optimum distribution.

The EPower system aims to remedy the limitations of the existing methods, and in particular to improve the method implemented by the "483" system, by providing a method of determination of an energy distribution using a more refined distribution criterion.

The EPower system therefore has for subject matter a method of determination of a distribution of energy to a plurality of electrical loads during a modulation period, the energy coming from at least one generator, the supply of a predetermined quantity of energy to any one of the electrical loads during this modulation period being effected by the generator emitting during a predetermined fraction of the modulation period an electrical signal the power whereof corresponds to that demanded to said electrical load, this method including a temporal distribution of the electrical signals emitted by the generator in the modulation period in accordance with a distribution criterion determined as a function of the electrical signals and applied successively to each electrical signal in the same modulation period, characterized in that the temporal distribution criterion for the electrical signals is more precisely determined as a function of the temporal length and the power of the electrical signals.

The temporal length and the power of an electrical signal are, before temporal distribution of all the electrical signals in the modulation period, the two parameters that define this electrical signal completely. Thus taking these two parameters into account in the temporal distribution criterion leads to an optimum distribution of the instantaneous power distributed by the generator in the modulation period.

Before effecting the distribution of the electrical signals in the modulation period, it is preferable to affect a step of classification of the electrical signals in order of priority in accordance with a predetermined priority criterion. Thus, optimization of the method resides not only in the use of an optimum distribution criterion but furthermore in the order of the electrical signals to which that distribution criterion is successively applied.

The priority criterion is preferably determined from the temporal length of each electrical signal (the electrical signals being classified in order of decreasing temporal length in this case, for example), from the power of each electrical signal (the electrical signals being classified in order of decreasing power in this case, for example), or from the product of the temporal length by the power of each electrical signal (the electrical signals being classified in order of decreasing product of temporal length by power in this case, for example).

A method according to the EPower system of determination of an energy distribution preferably also includes a plurality of classification steps in accordance with a plurality of respective priority criteria, each classification step being followed by a step of distribution of the electrical signals in the modulation period and a step of assessing if that distribution is the optimum distribution by the calculation of an efficiency factor, the distribution finally retained being that corresponding to the best value of the efficiency factor.

More precisely, the successive temporal distribution of the electrical signals in the modulation period is iterative, for example, and may include the following steps in each iteration in which a temporary distribution in the modulation period induces at least one power range: selection, in this temporary distribution, of a minimum power range; if the electrical signals to be distributed include at least one electrical signal whose temporal length is identical to that of the selected range, selection of the electrical signal of higher power whose temporal length is equal to that of the selected range; if not, selection of the next electrical signal in the priority order defined during the classification step; positioning of said electrical signal in the selected range, thus generating a new temporary distribution.

The distribution of the predetermined quantity of energy to each electrical load necessitating the global emission by the generator of an average electrical power during the modulation period, there is optionally further defined a reduction factor for that average electrical power, said reduction factor then being applied to each predetermined quantity of energy to be supplied to the corresponding electrical load.

In this case, it is further possible to associate with at least one electrical load a minimum threshold value of the reduction factor applied to said electrical load.

The EPower system also consists in a system for distribution of energy to a plurality of electrical loads during a modulation period, the energy coming from at least one generator, comprising at least one switch per electrical load for the supply of a predetermined quantity of energy to said electrical load during said modulation period by the transmission of an electrical signal the power whereof corresponds to that demanded to said electrical load and that is emitted by the generator, during a predetermined fraction of the modulation period, characterized in that said system further includes a calculator for effecting a temporal distribution of the electrical signals emitted by the generator in the modulation period in accordance with a distribution criterion determined as a function of the temporal length and the power of the electrical signals and applied successively to each electrical signal in the same modulation period, and a device for controlling the switches for application by the switches of this temporal distribution effected by the calculator.

Each switch preferably includes at least one thyristor. In fact, by virtue of its price and its robust nature, the thyristor appears at present to be the best power electronic component able to implement this switch function in the system concerned. Having said this, each switch could consist of any other interrupter member.

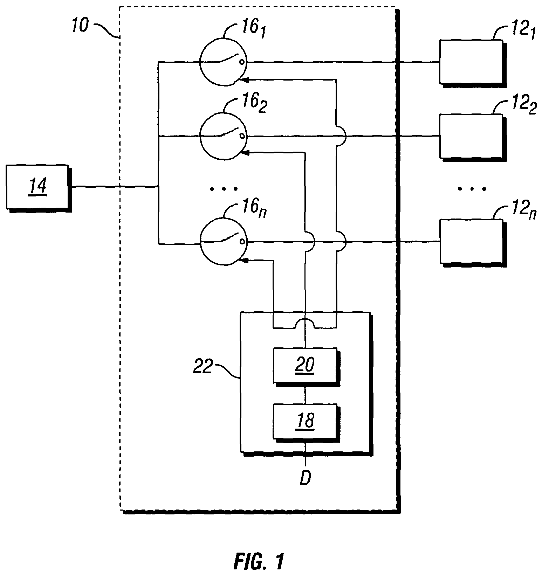

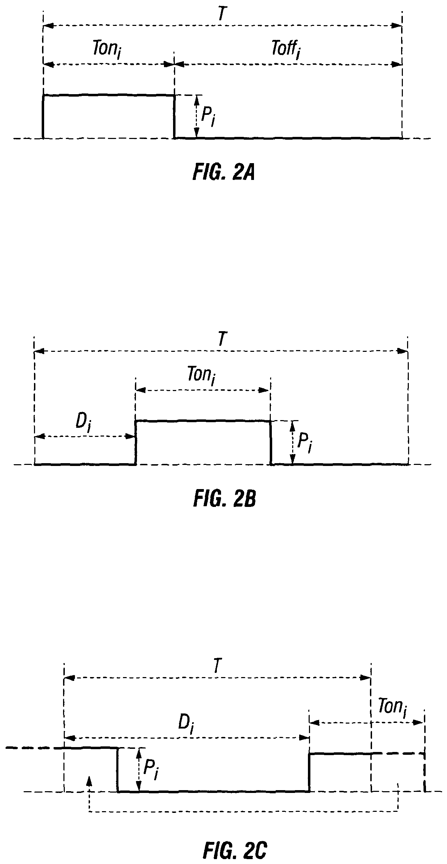

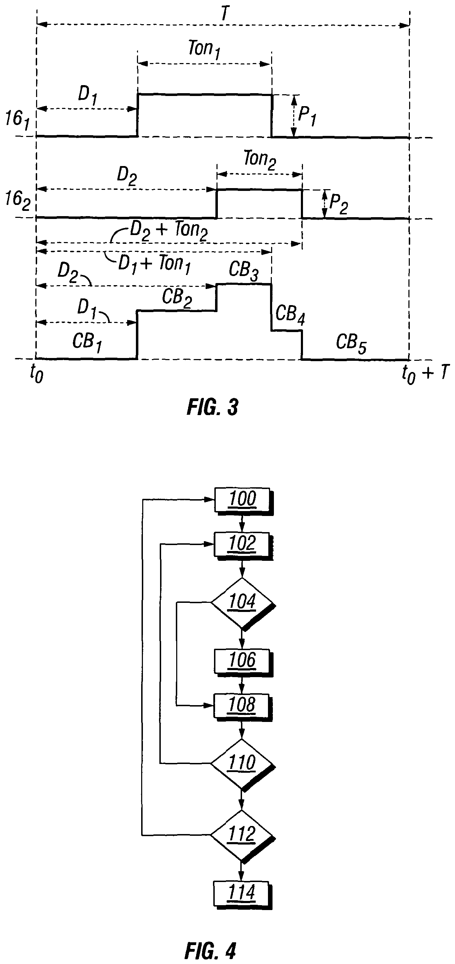

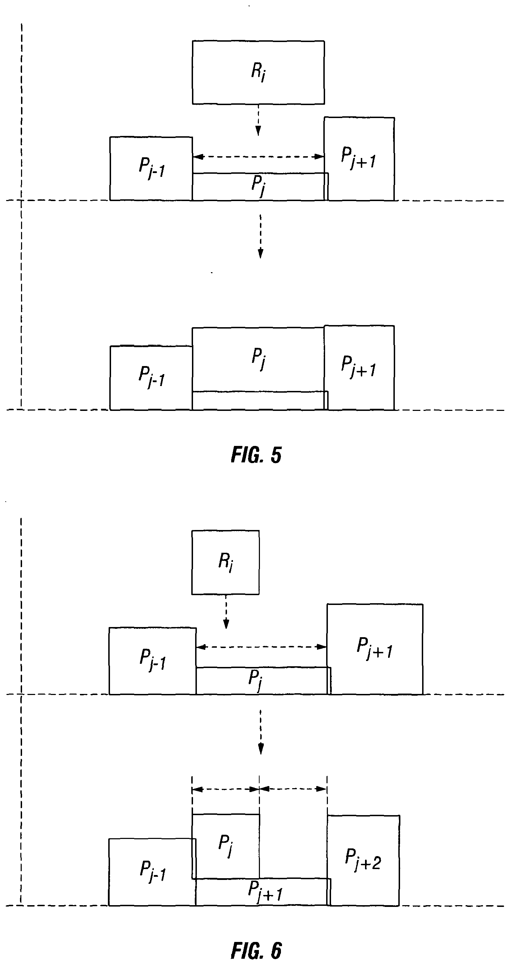

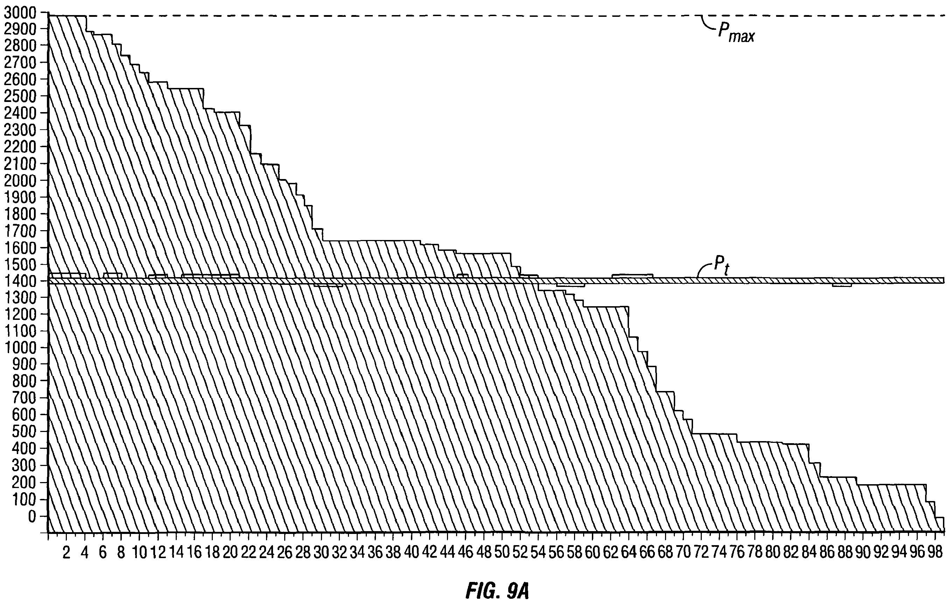

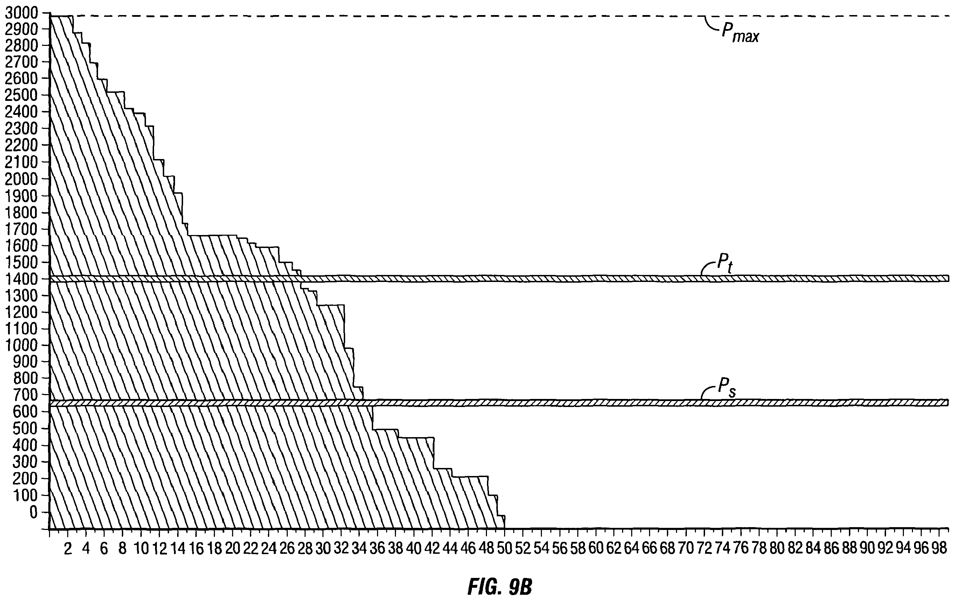

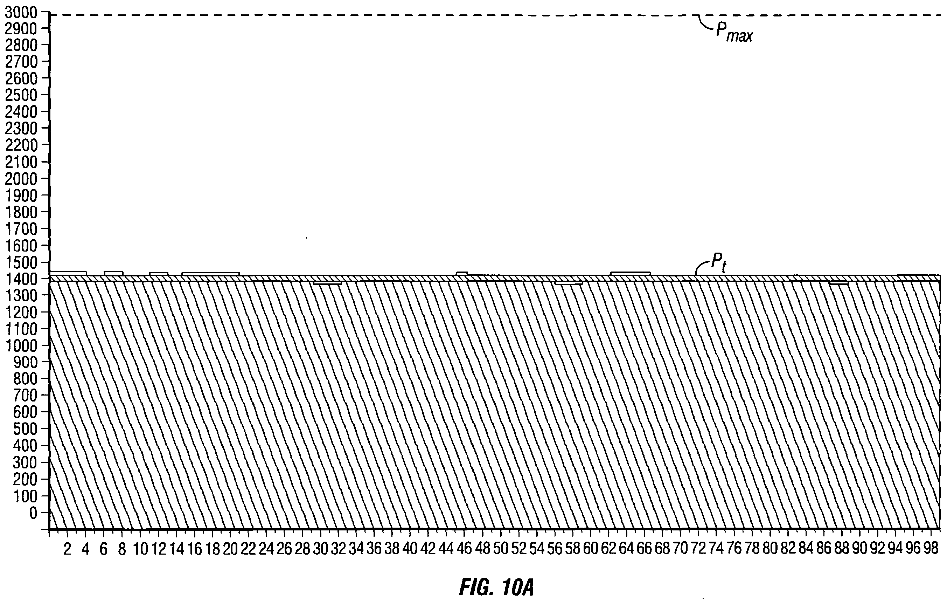

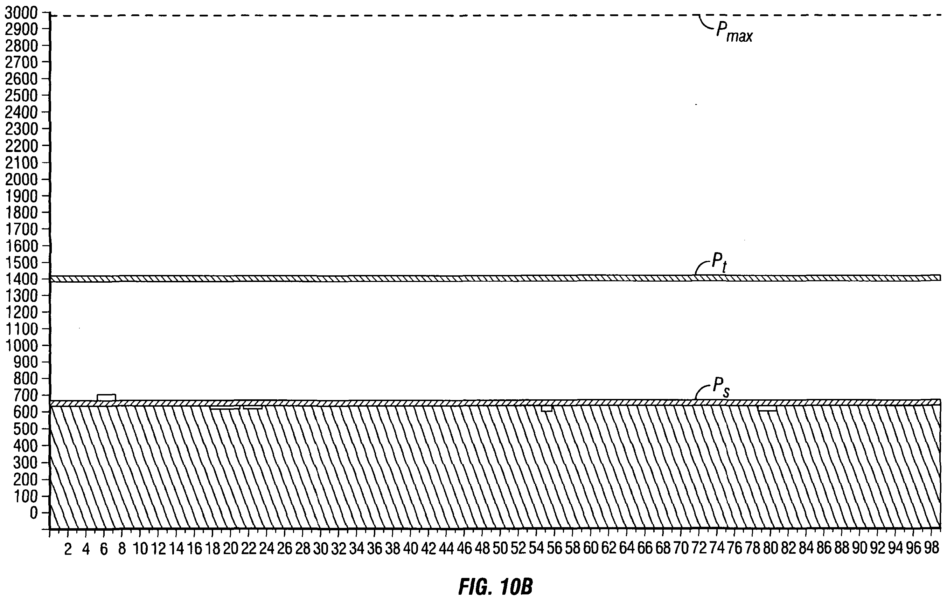

The EPower system will be better understood with the aid of the following description, given by way of example only and with reference to the appended drawings, in which: Fig. 1 shows diagrammatically the structure of an energy distribution system in accordance with one possible embodiment of the EPower system; Figs. 2a, 2b and 2c show diagrammatically the general appearance of an electrical signal intended to be output by a generator in a modulation period; Fig. 3 represents diagrammatically the general appearance of the superposition of two electrical signals in the same modulation period; Fig. 4 shows the successive steps of a method of determination of an energy distribution in accordance with one possible embodiment of the EPower system; Figs. 5, 6, 7, 8a and 8b show diagrammatically different possible configurations of superposition of electrical signals during the application of the method from Fig. 4; Fig. 9a shows a non-optimum distribution of a plurality of electrical signals in the same modulation period; Fig. 9b shows a non-optimum distribution of a plurality of electrical signals in the same modulation period, after application of a reduction factor in accordance with the EPower system; Fig. 10a shows an optimum distribution of a plurality of electrical signals in the same modulation period after application of the method from Fig. 4; Fig. 10b shows an optimum distribution of a plurality of electrical signals in the same modulation period, after application of the method from Fig. 4 and the reduction factor.

The installation shown in Fig. 1 includes a system 10 for distribution of electrical energy to a plurality of electrical loads $12_1$, $12_2$, ..., $12_n$ during a modulation period with the aid of at least one generator 14.

The application described hereinafter concerns distribution of alternating current energy. The electrical signals emitted by the generator in this particular case take the form of wave streams, but could take other forms for other applications of the EPower system.

The system 10 comprises a plurality of switches $16_1$, $16_2$, ..., $16_n$ with one switch for each electrical load. Each switch $16_i$, preferably consisting of a pair of thyristors connected in anti-parallel, is disposed, between the generator 14 and the corresponding electrical load 12i, in the electrical power supply circuit that connects the generator 14 to the electrical load $12_i$.

The supply of a predetermined quantity of energy to any one of the electrical loads $12_i$ during a modulation period is effected by the generator 14 outputting, during a predetermined fraction of the modulation period, an electrical wave stream the power whereof corresponds to that of that electrical load $12_i$.

The start of the emission of the electrical wave stream for supplying power to the electrical load $12_i$ is triggered by the closure of the switch 16i. The end of the emission of this electrical wave stream is triggered by the opening of the switch $16_i$. Thus, by determining the times of opening and of closing of each of the switches $16_1$, $16_2$, ..., $16_n$ of the system 10, there is defined a temporal distribution of the wave streams emitted by the generator 14 in the same modulation period.

In conformance with the EPower system, a criterion of temporal distribution of the wave streams in a modulation period is determined as a function of the temporal length and the power of the wave streams.

To effect this temporal distribution with the aid of the distribution criterion defined above, the system includes a central unit 22, taking, for example, the form of a microprocessor associated with one or more memories, which includes a calculator 18.

This calculator 18 optionally puts into order beforehand the various wave streams to be emitted by the generator 14 to the various electrical loads $12_1$, $12_2$, ... $12_n$ and then successively processes these wave streams in such a manner as to distribute them temporally in the modulation period in an optimum manner with the aid of the distribution criterion defined above. The operation of this calculator 18 will be described in detail with reference to Figs. 4 to 8b.

Furthermore, the central unit 22 comprises a device 20 for controlling the switches $16_1$, $16_2$, ... $16_n$. This control device 20 implements an interface function between the calculator 18 that defines the temporal distribution of the wave streams in the modulation period and the switches $16_1$, $16_2$, ... $16_n$ that actually effect this temporal distribution.

A wave stream is an alternating current electrical signal emitted by the generator 14 during a fraction of the modulation period. As may be seen in Figs. 2a, 2b and 2c, such a wave stream may be diagrammatically represented by a rectangle. This rectangle has a length $Ton_i$ that corresponds to the temporal length of the wave stream and represents a fraction of the modulation period T. It also has a height $P_i$ that corresponds to the power of the wave stream and therefore of the corresponding electrical load $12_i$. The corresponding switch $16_i$ is closed during the emission of the wave stream, that is to say during the time period $Ton_i$, and is open during the time period $Toff_i = T - Ton_i$.

As shown in Fig. 2a, the wave stream may be emitted at the start of the modulation period T. It also may be offset by a delay $D_i$ in the modulation period T, as shown in Fig. 2b. Finally, as shown in Fig. 2c, if the offset $D_i$ is greater than $Toff_i$, because of the periodic nature of the process, a first part of the wave stream is emitted at the end of the modulation period, the other part being emitted at the beginning of the modulation period.

Fig. 3 shows the optional superposition of two wave streams emitted by the generator 14 in the same modulation period. A first wave stream of temporal length $Ton_1$ and of power $P_1$ is emitted by the generator 14 with a delay $D_1$ to the electrical load $12_1$ via the switch $16_1$. A second wave stream of temporal length $Ton_2$ and of power $P_2$ is emitted by the generator 14 with a delay $D_2$ to the electrical load $12_2$ via the switch $16_2$. If the two wave streams are superposed at least in part, as is the case in the example shown in Fig. 3, the powers add in the area of superposition of the wave streams, the generator 14 then transmitting an electrical power equal to the sum $P_1 + P_2$. As a result of this, in the modulation period T, a plurality of ranges of power emitted by the generator 14 may be distinguished. The modulation period is in fact divided into five intervals in the Fig. 3 example. During the interval $[t_0, t_0 + D_1]$ no power is emitted. During the interval $[t_0 + D_1, t_0 + D_2]$, a power $P_1$ is emitted. During the interval $[t_0 + D_2, t_0 + D_1 + Ton_1]$, a power $P_1 + P_2$ is emitted. During the interval $[t_0 + D_1 + Ton_1, t_0 + D_2 + Ton_2]$, a power $P_2$ is emitted. Finally, during the last interval $[t_0 + D_2 + Ton_2, t_0+T]$, no power is emitted.

Generalizing this simple example to n electrical loads to be supplied with electrical energy in the same modulation period, a large number of possible configurations of superposition of wave streams is obtained, some of which correspond to strong variations of the instantaneous power output by the generator 14. The object of the EPower system is to limit these variations as much as possible. For measuring these variations, an efficiency factor f is defined with the aid of the following magnitudes:

$$P_{\max} = \sum_{i=1}^{n} P_i \; ;$$

CPmin = the lowest value of the instantaneous power emitted by the generator 14 during the modulation period T for a given distribution; and CPmax = the highest value of the instantaneous power emitted by the generator 14 during the modulation period T for a given distribution. The efficiency factor f is then given by the following equation:

$$f = \frac{P_{max} - (CP_{max} - CP_{min})}{P_{max}}$$

The calculator 18 then carries out the steps of the method shown in Fig. 4. This method includes a first step 100 of classification of the wave streams in order of priority in accordance with a predetermined priority criterion. The priority criterion, for example, is the temporal length of each wave stream, the power of each wave stream or the product of the temporal length by the power of each wave stream. If the priority criterion is the temporal length of each wave stream, the latter are put into decreasing temporal length order. The method is then applied iteratively for each wave stream. At a step of this iteration, a certain number of wave streams are already distributed in the modulation period, thus generating a temporary distribution. The calculator 18 selects the first range of minimum power in this temporary distribution during a step 102. During the next step 104, the calculator 18 looks to see if the wave streams to be distributed include at least one wave stream the temporal length whereof is identical to that of the selected range. If this is the case, the wave stream is selected whose temporal length is equal to that of the selected range, of greater power.

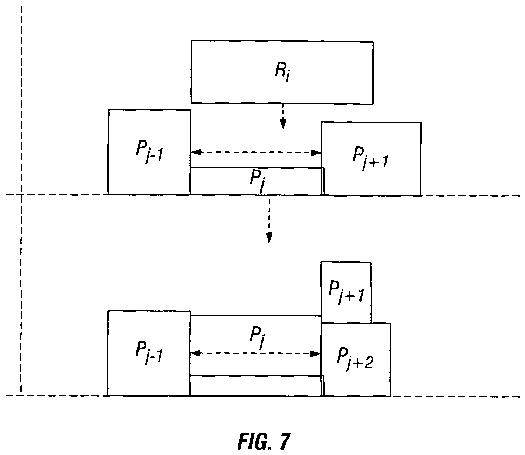

There follows a step 108 of positioning this wave stream in the selected range, in accordance with the configuration represented in Fig. 5. Otherwise, if the wave streams to be distributed do not include a wave stream whose temporal length is identical to that of the selected range, there follows a step 106 of selection of the next wave stream in the priority order defined during the first step 100. In this case, two configurations are possible, and represented in Figs. 6 and 7, respectively.

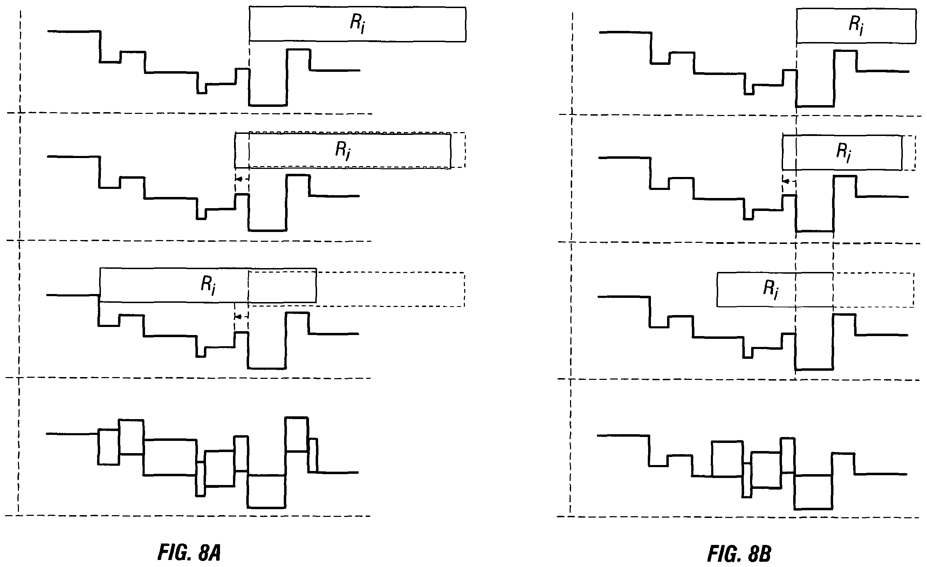

In conformance with the first configuration represented in Fig. 6, if the selected wave stream has a temporal length less than that of the selected range, that wave stream is positioned during the step 108 so that its rising edge corresponds to the beginning of the selected range. The wave stream is integrated completely into the selected range. In conformance with the second configuration represented in Fig. 7, if the selected wave stream has a temporal length greater than that of the selected range, that wave stream is also positioned during the step 108 so that its rising edge corresponds to the beginning of the selected range. However, a portion of the wave stream extends beyond the selected range. That portion is therefore positioned in the subsequent range or ranges. Optionally, if the Fig. 7 configuration applies, the selected wave stream may also be moved around the selected range, in conformance with what is shown in Figs. 8a and 8b.

In Fig. 8a, if the rising edge of the selected wave stream is positioned at the beginning of the selected range, the latter is shifted toward the left in the modulation period until its rising edge is positioned at the end of the first range whose power is greater than that of the range that follows temporally the selected range. If, as shown in Fig. 8b, during the shift toward the left, the falling edge of the selected wave stream is positioned at the end of the selected range before its rising edge has reached a range whose power is greater than that of the range that follows temporally the selected range, then the selected wave stream is retained at that position. When the selected wave stream has been positioned, there follows a step 110 during which the calculator 18 verifies if there remains at least one wave stream to be positioned. If this is the case, the process is resumed from the step 102. If not, there follows a step 112 which verifies whether the iterative process has been executed on the basis of all possible priority criteria. If this is not the case, the process is resumed from the step 100 to put the wave streams into order in accordance with a new priority criterion (the power of each wave stream or the product of the temporal length by the power of each wave stream, for example). If not, there follows the final step 114 of selection of the best distribution.

Thus, in conformance with the method described above, the wave streams may first be classified in order of decreasing temporal length, after which the iterative process is executed a first time. There is then obtained a first result supplying a first efficiency factor value. The first classification step is then repeated with the wave streams classified in decreasing power order, after which the iterative process is executed a second time. There is then obtained a second result providing a second efficiency factor value. Finally, the first classification step is repeated, classifying the wave streams in order of decreasing product of the temporal length by the power of each wave stream, after which the iterative process is executed a third time. There is then obtained a third result supplying a third efficiency factor value.

The step 114 then selects that of the three distributions obtained that produces the highest efficiency factor. Moreover, it is possible to impose a reduction factor r on the quantity of energy supplied by the generator 14 to the electrical loads $12_1$, $12_2$, ..., $12_n$ during the modulation period. Knowing that the mean power $P_t$ emitted by the generator 14 during the modulation period is defined by the following equation:

$$P_t = \frac{\sum_{i=1}^{n} P_i Ton_i}{T}$$

the reduction factor R imposes a reduced mean power $P_s$ emitted by the generator 14, for the purpose of reducing energy consumption:

$$P_s = rP_t$$

This reduction factor may be applied to all the electrical loads without distinction. In this case it is applied to the temporal lengths of the corresponding wave streams. However, any electrical load may be deemed as one not to be subjected to a reduction factor below a threshold value $S_i$. In this case a reduction factor $R_i$ is applied to it such that $R_i = S_i$ if $R < S_i$ and $R_i = R$ otherwise. Thus the new wave streams to be distributed have varying temporal lengths $R_i.Ton_i$. To take into account the reduction factor $r$ and the threshold values $S_i$, the new wave streams are distributed in the modulation period by application of the method described above.

Fig. 9a shows the evolution of the power emitted by the generator 14 during a modulation period to supply power to a large number n of electrical loads when no distribution method is applied. Note that all the wave streams begin at the time to of the modulation period, which inevitably produces a very low efficiency factor. Applying a reduction factor r as defined above, equal to 0.5, for example, to all the electrical loads, and again without applying any distribution method, there is obtained, as indicated in Fig. 9b, the same distribution profile as in Fig. 9b, but compressed temporally by a factor of 0.5. The resulting efficiency factor is at least as low as the previous one. Comparatively, for the same number of electrical loads and the same wave streams to be delivered by the generator 14, the distribution represented in Fig. 10a is obtained after application of a method according to the EPower system. The distribution obtained supplies to the n electrical loads the same screens of waves as in Fig. 9a. On the other hand, the efficiency factor obtained is significantly higher, and even very close to 1, which means that the instantaneous power distributed by the generator 14 is quasi-constant and remains very close to the average power $P_t$ necessary for supplying the n electrical loads.

Fig. 10b shows that, by imposing a reduction factor R identical to that of Fig. 9b, and again executing a method according to the EPower system, a new distribution is obtained the efficiency factor whereof remains very high and very close to 1. The instantaneous power distributed by the generator 14 is quasi-constant and remains very close to the average power necessary for supplying the n electrical loads corrected by the reduction factor R ($P_s$). Thanks to the application of the method described above, a very good distribution is obtained, in the same modulation period, of the various electrical signals to be emitted by a generator 14 to a plurality of electrical loads $12_1$, $12_2$, ..., $12_n$. This optimized distribution remains at all times very close to the value of the average power necessary for supplying the electrical loads. It thus becomes much simpler for a user having a certain number of electrical loads to be supplied and knowing the overall requirement of those electrical loads, to choose a fixed-price agreement with an electrical energy supplier, without fear of locally exceeding that fixed charge. It further will be noted that the EPower system is not limited to the embodiment described above. In particular, the electrical signals output by the generator are not necessarily wave streams, for example if the application envisaged concerns the distribution of direct current electrical energy.

The EPower system provides a method of determination of a distribution of energy to a plurality of electrical loads $12_1$, $12_2$, ..., $12_n$ during a modulation period T, the energy coming from at least one generator 14, the supply of a predetermined quantity of energy to any one of the electrical loads during this modulation period being effected by the generator emitting during a predetermined fraction of the modulation period an electrical signal the power whereof corresponds to that demanded to said electrical load, this method including a temporal distribution 102, 104, 106, 108, 110, 112 of the electrical signals emitted by the generator in the modulation period in accordance with a distribution criterion determined as a function of the electrical signals and applied successively to each electrical signal in the same modulation period, characterized in that the temporal distribution criterion for the electrical signals is more precisely determined as a function of the temporal length and the power of the electrical signals. The EPower system method may also include a step 100 of classification of the electrical signals in priority order in accordance with a predetermined priority criterion, this classification step being effected before the distribution 102, 104, 106, 108, 110, 112 of the electrical signals in the modulation period. The EPower system method may also include a step wherein the priority criterion is determined from one of the elements of the group consisting of the temporal length $Ton_i$ of each electrical signal, the power $P_i$ of each electrical signal and the product of the temporal length by the power of each electrical signal.

The EPower system method may also include a plurality of classification steps 100 in accordance with a plurality of respective priority criteria, each classification step being followed by a step of distribution 102, 104, 106, 108, 110, 112 of the electrical signals in the modulation period and a step of assessing if that distribution is the optimum distribution by the calculation of an efficiency factor, the distribution finally retained 114 being that corresponding to the best value of the efficiency factor. The EPower system method also may include a step wherein the successive temporal distribution of the electrical signals in the modulation period T is iterative and includes the following steps in each iteration in which a temporary distribution in the modulation period induces at least one power range: - selection 102, in this temporary distribution, of a minimum power range; - if the electrical signals to be distributed include at least one electrical signal whose temporal length is identical to that of the selected range, selection 104 of the electrical signal of higher power whose temporal length is equal to that of the selected range; - if not, selection 106 of the next electrical signal in the priority order defined during the classification step 100; - positioning 108 of said electrical signal in the selected range, thus generating a new temporary distribution.

The EPower system method may also include a step wherein, the distribution of the predetermined quantity of energy to each electrical load $12_i$ necessitating the global emission by the generator 14 of an average electrical power during the modulation period T, there is further defined a reduction factor for that average electrical power, said reduction factor then being applied to each predetermined quantity of energy to be supplied to the corresponding electrical load $12_i$. The EPower system method may also include a step, wherein there is further associated with at least one electrical load $12_i$ a minimum threshold value of the reduction factor applied to that electrical load $12_i$.

The EPower system 10 provides for distribution of energy to a plurality of electrical loads $12_1$, $12_2$, ..., $12_n$ during a modulation period, the energy coming from at least one generator 14, comprising at least one switch $16_1$, $16_2$, ..., $16_n$ per electrical load for the supply of a predetermined quantity of energy to said electrical load during said modulation period by the transmission of an electrical signal the power whereof corresponds to that of said electrical load and that is emitted by the generator 14, during a predetermined fraction of the modulation period, characterized in that said system further includes a calculator 18 for effecting a temporal distribution of the electrical signals emitted by the generator in the modulation period in accordance with a distribution criterion determined as a function of the temporal length and the power of the electrical signals and applied successively to each electrical signal in the same modulation period, and a device (20) for controlling the switches for application by the switches of this temporal distribution effected by the calculator. The EPower system may also include a step, wherein each switch ($16_1$, $16_2$, ..., $16_n$) includes at least one thyristor. It is an object of the present invention to provide improvements in electrical power control and reductions in energy costs particularly heating energy costs.

The application of these teachings is now described in more detail by reference to applications in the field of glass and glass product manufacturing. It is to be understood, however, that the teachings of the present disclosure can be applied to a broad variety of heating application as well as other industrial power control applications. The EPower Power Management System is based on a Control (CPU) module which is capable of controlling up to four thyristor power stacks in a "PLC-like" design layout. Up to 63 of these Power Management Control Modules can be integrated together via a fast network (CAN-bus) to become a large scale intelligent power control system. This large scale Intelligent Power Control system further enhanced by applicant's patented "Predictive Load Management" functionality (PLM©).

Such a system is able to manage effectively the varied requirements of both small and large scale heating installations from glass bending lines, tempering furnaces and autoclaves to complete Float Glass Bath and Annealing Lehr installations. Managing these powers demands to maintain an almost constant power demand and preventing load peaks and spikes.

In applications where manufacturers have to control multiple loads, the load management features of EPower will give these users a better control over their peak power demands. In many countries the monthly peak power demand is a critical factor in the cost that the end users have to pay for electrical energy. The following will explain in detail how PLM (Predictive Load Management) works, its capabilities and the projected cost savings which can be enjoyed in large scale electrical heating system installations typified by those in the glass industry. In a first example, in glass fibre manufacturing "bushings" are used to form the fibre. Bushings are rectangular-shaped platinum alloy devices with multiple nozzles, up to 4800 in their base. Those bushings are electrical heated and temperature regulated to be able to precisely control the glass flow, thus the fibre diameter. For that (multiple) thermo element(s) are mounted to the bushing which is connected, by compensated wiring to temperature PID-controllers. Those temperature controllers output (Manipulated Value) controls SCR high power controllers. Via a step down transformer, a controlled current around 300 Amps at 3 - 6 Volts runs thru the low resistive platinum alloy bushing and heats it up to the desired operation temperature. Specific accuracy of such a temperature control needs to be better as 0,50C. During start-up and daily operation multiple temperature control strategies are used like; temperature gradient control during heat-up, temperature ramp and temperature jump ramp.

Normally SCR bushing power controllers run in phase angle firing mode to have a very smooth current/temperature control. Disadvantage of phase angle firing is the related bad power factor which is normally compensated by capacitors. Today EPowers' flexibility, free programmability and "on-the-fly" firing mode switching makes it possible to run bushings at best achievable power factor, temperature accuracy and temperature strategy. Therefore it is now proposed to run bushing, during normal operation, in zero crossing firing mode which typically runs at a maximum power factor ($\approx 1$). The zero crossing firing related "network flickering" disadvantages in multiple bushing applications are now solved with our EPower build in, patented innovative predictive load management (PLM®) strategy.

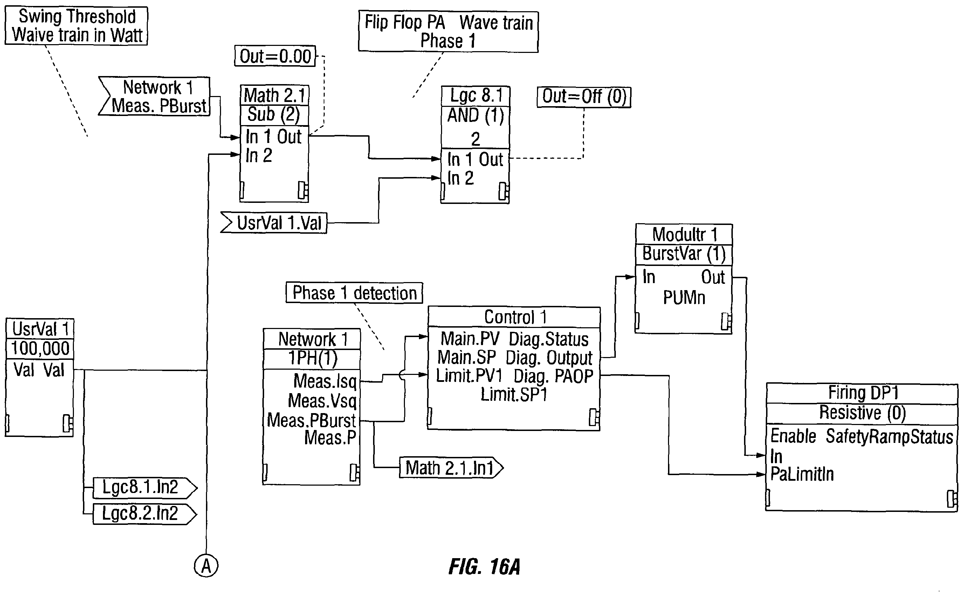

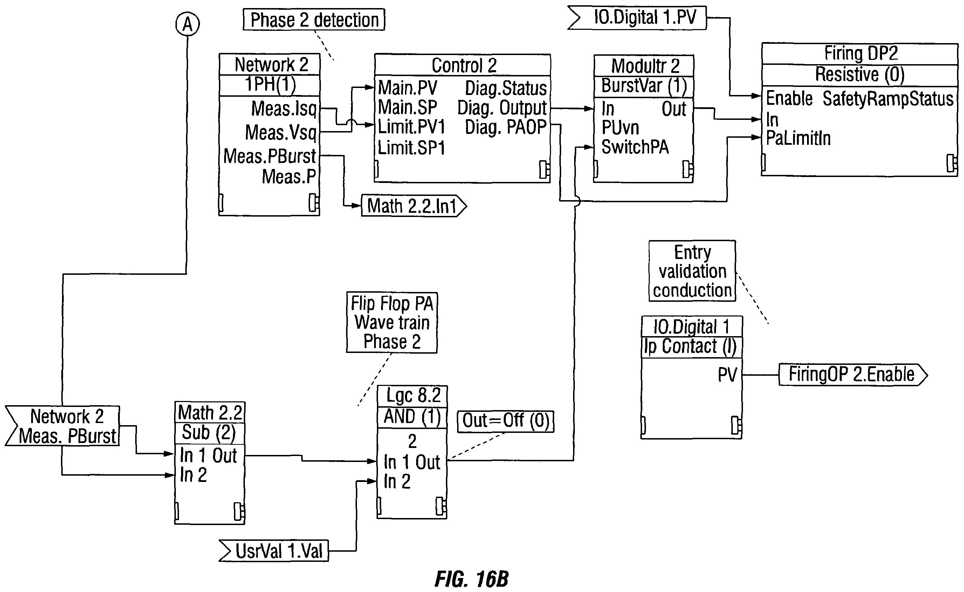

Fig. 16 shows the application of burst to phase angle switching (and vice versa) when the power given to the load overtake a settable value. This application is for a batch furnace with Super-Kantal heating elements. In a second example, in a glass melting application electrical boosting is an effective way to increase furnace pull rate and/or to be able to apply heat into the lower regions of glass furnaces running reduced heat (infra-red) radiation transmitting glasses. As glass becomes electrical conductive at high temperatures, typically those systems exist of multiple molybdenum electrodes, in multiple zones mounted into the bottom or side walls of the furnace on which electrical current is applied. The current runs in zones between those electrodes and heats up glass by it own resistance.

To be able to reduce initial and operational cost, we now propose to industry to use multiple water cooled transformers with integrated SCR's, EPower power controllers and DC-elimination. By using much smaller fully integrated systems that are water cooled it becomes feasible to place those systems much closer to the furnace thereby reducing the length of expensive high current cables or bus-bars. Water cooling first will run thru the boosting power system and then thru the boosting electrode holders. Splitting the total boosting system over several standardized power control units (per two electrodes or per zone) will provide long term, less failure risk and spare part availability. In multiple full cycle firing (also called burst firing mode) load applications, like the operation of several bending or laminating furnaces and annealing lehrs, peak power demands are likely to occur if no special measures are taken. In multiple load situations were phase angle firing is used the whole facility may suffer from a poor power factor (cos φ). Both, high peak power demands as well as poor power factor will lead to higher energy cost and increased $CO_2$ emissions. Utility companies may apply a surcharge when the power factor goes below 0.9 (or 90%) or if agreed maximum power demands are exceeded. By the end of the year this can translate into thousands or even tens of thousands of dollars, depending on the size of the installation.

The "demand charge" represents the cost per kW multiplied by the greatest 15-minute demand reached in kW during the month for which the bill is rendered; however the demand is subject to power factor adjustments. Electric power suppliers may reserve the right to measure such power factors at any time. Should measurements indicate that the average power factor is less than 90%, the adjusted demand will be the demand as recorded by the demand meter multiplied by 90% and divided by the percent power factor. Next to that, unnecessary power systems hardware investments are needed to cover those peak power demands. In addition to this energy cost penalty, these possible peak power demands result in investment in unnecessarily large (oversized) power distribution systems. Predictive Load Management (PLM) is able to eliminate those full cycle firing drawbacks resulting in more effective performance not just through simple synchronised firing or 'Load Optimisation', but through load balancing and load shedding strategies provided as standard features of EPower.

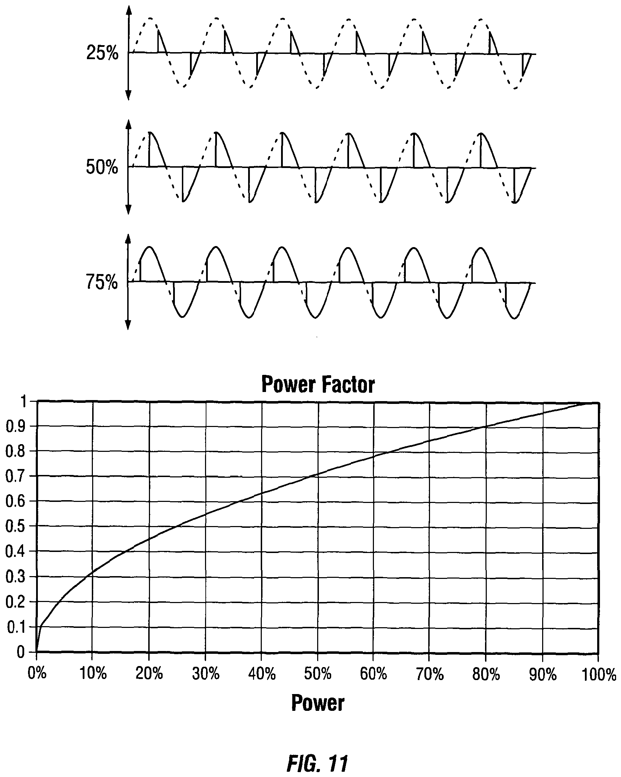

In most of the applications EPower makes it possible to switch from phase angle firing into full cycle firing mode. If phase angle firing is still necessary, LTC (Load Tap Changing) strategies are able to potentially increase the power factor and help to minimise any energy cost penalties. Electrical heating systems such as glass furnace boosting, fibreglass insulation and reinforcement bushings, tin bath and annealing lehr heating systems normally use SCR (semi conducting rectifier) controllers, firing in phase angle mode. Phase angle firing typically degrades the power factor while increasing harmonics and electrical noise. With phase angle firing, as shown in Fig. 11, the power factor decreases rapidly with output power. At 50% power, the power factor is only 0.7. At 25% power, the same power factor decreases even more to 0.5. Moreover, phase angle firing creates all sorts of disturbances on the grid, such as harmonics, RFI, line losses, energy waste (kVAr) and transformer overheating. The manufacturer will eventually be forced to increase the capacity of their equipment to compensate for these disturbances, for example by installing active or passive systems such as costly capacitors.

While Phase angle firing is a simple and smooth way to control power demands with SCR's, it has two major disadvantages: poor power factor and lots of harmonics. There are two effective methods to improve power factor in SCR driven power control systems.

- Load tap changing
- Full cycle firing

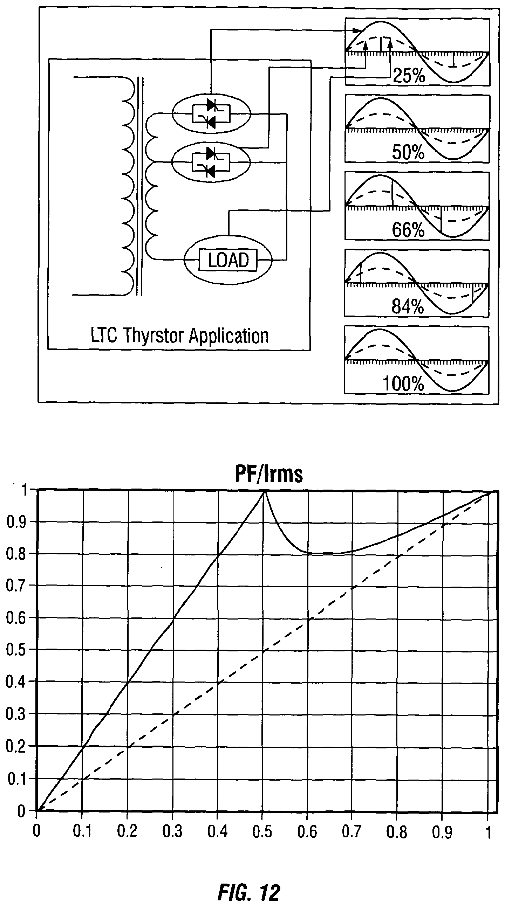

'On Load' tap changing provides an effective way of increasing power factor of an SCR driven power system. According to the invention, an automatic LTC system can be used in either phase angle or burst firing modes of operation. By adding several taps to the transformer with a dedicated SCR for each tap together with overlapping firing orders, such a system is capable of running at an increased power factor over a much larger range when using phase angle firing. The example in Fig. 12 shows a two tap LTC configuration running in phase angle mode and corresponding improved power factor of such a system. By adding more taps the power factor performance increases. At the design state it is of course necessary to have clear understanding of the overall voltage range and the daily voltage operation range, as the best power factor can only be achieved by carefully calculating the tap-voltages. More information on LTC can be found in the applicant's LTC white paper. The easiest way to increase the power factor is to switch from phase angle to Full Cycle firing, also called zero cross or burst firing. In this firing mode a modulation period is defined and inside such a modulation period the SCR is modulated with single or multiple full cycles according to the power demand.

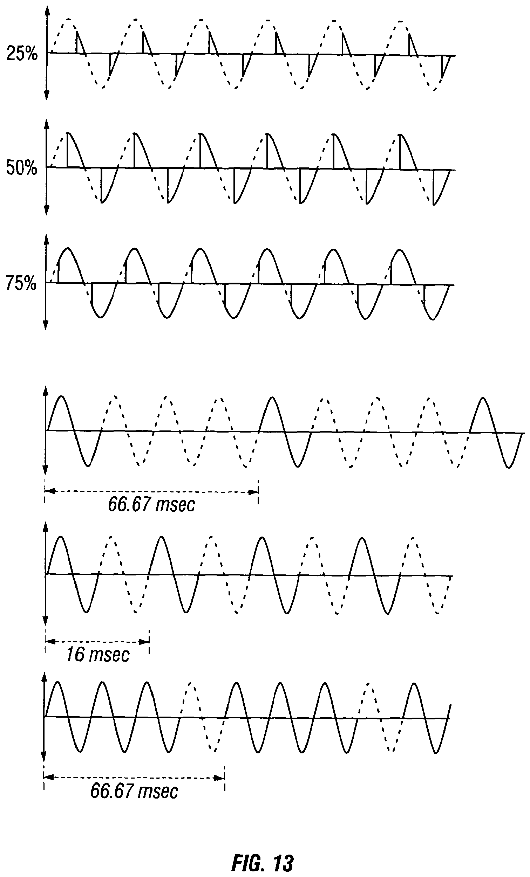

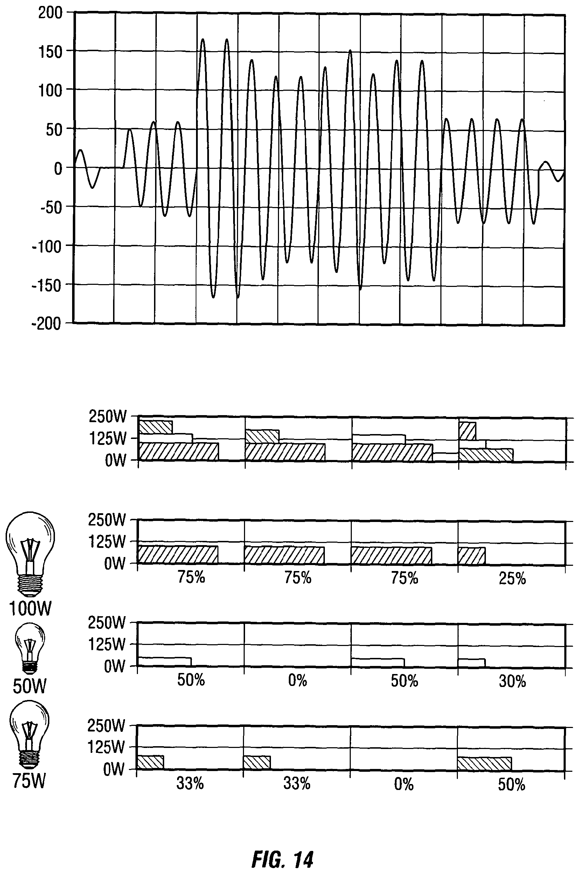

The Fig. 13 shows a comparison between a single SCR power system running in phase angle mode and full cycle firing mode at respectively 25%, 50% and 75% of the maximum power. Theoretically, full cycle firing will result in a power factor of 1 but due to unavoidable inductive loads, like transformers, wiring, etc. such a system will have an overall power factor >0.9. In fact. those systems will run at the highest achievable power factor whilst avoiding the phase angle influences on the overall power factor. Unfortunately, full cycle firing can introduce a flicker effect (main voltage variation) which in turn could affect motors and create a visual disturbance (light flicker, similar to fluorescent lights). This situation is illustrated generally in FIG. 14 where loads stack up at the start of a power distribution period creating a relatively heavy power demand at the start of the period and a relatively low power demand at the end of the period. This flicker effect can become more severe in multiple SCR controlled applications such as tin bath heating, annealing lehr and bushing controls when running large numbers of zones. These systems can easily contain more then 40 zones running at different power levels and variable set points. If not properly monitored, this may lead to large uncontrolled peaks of power. Thus many zones, randomly fired in time will increase the random peak power consumption with two possible scenarios: 1. On new installations we therefore design in this overhead based on the maximum possible peak values, and accept the consequential additional cost of this exercise. 2. On existing installations where we may be making process improvements, changing products or increasing production capacity. This additional load may exceed the designed total power capacity of the installation resulting in possible overloads even possible black-outs.

It is, however. possible to address both of these scenarios firstly by ensuring that peaks of power are reduced by balancing or sharing automatically the demand across many loads to 'smooth' the average power demand on the distribution, whilst importantly still maintaining the desired power to each of these zones. Secondly, by optimising and limiting the maximum allowable peak power demand of a system. In conclusion, the power factor benefits of the full cycle firing mode provides such a big advantage that methods need to be developed to overcome the peak power related problems. One of the most sophisticated methods is our recently developed "Predictive Load Management" (PLM).

Two features of PLM which help to address the above effectively, these are Load Balancing (or Load Sharing) and Load Shedding and are described briefly below. Overall the load balancing strategy is the most important part of PLM functionality allowing to combine multiple burst firing SCR's whilst maintaining a stable overall power demand. Load balancing is a strategy of equally distributing power of different loads to obtain an overall power consumption as stable and balanced as possible thus eliminating peaks of power. Combining multiple SCR's which are burst firing into different loads at different rates necessitates a number of sophisticated algorithms.

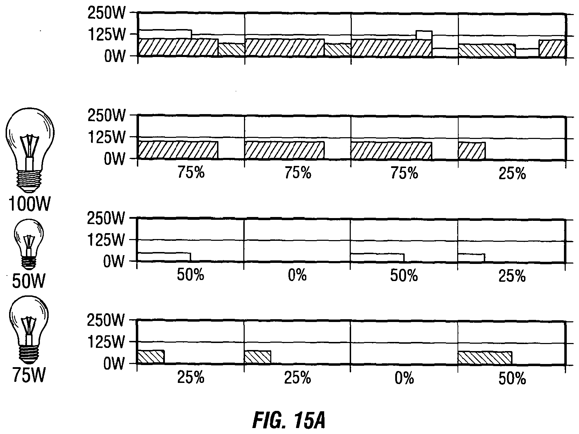

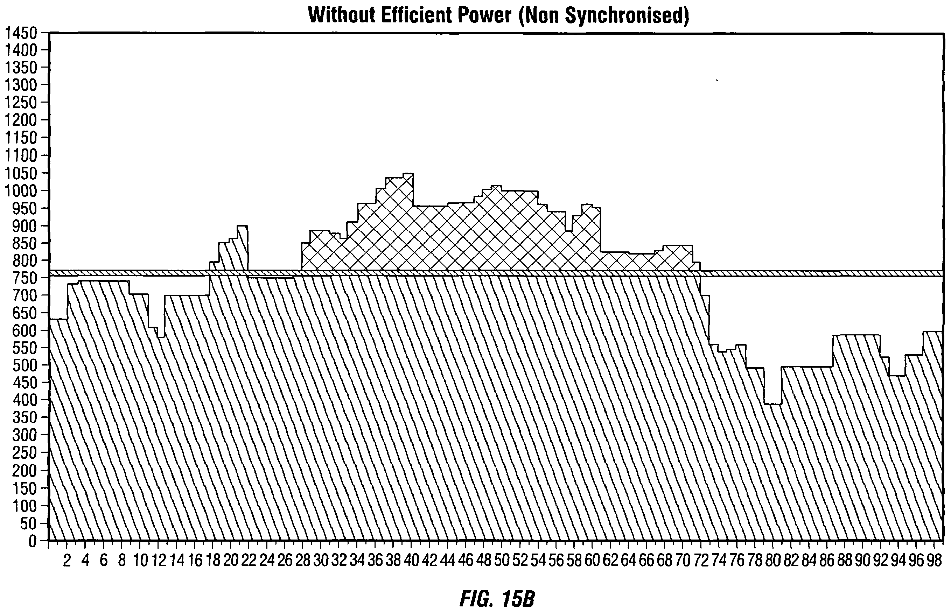

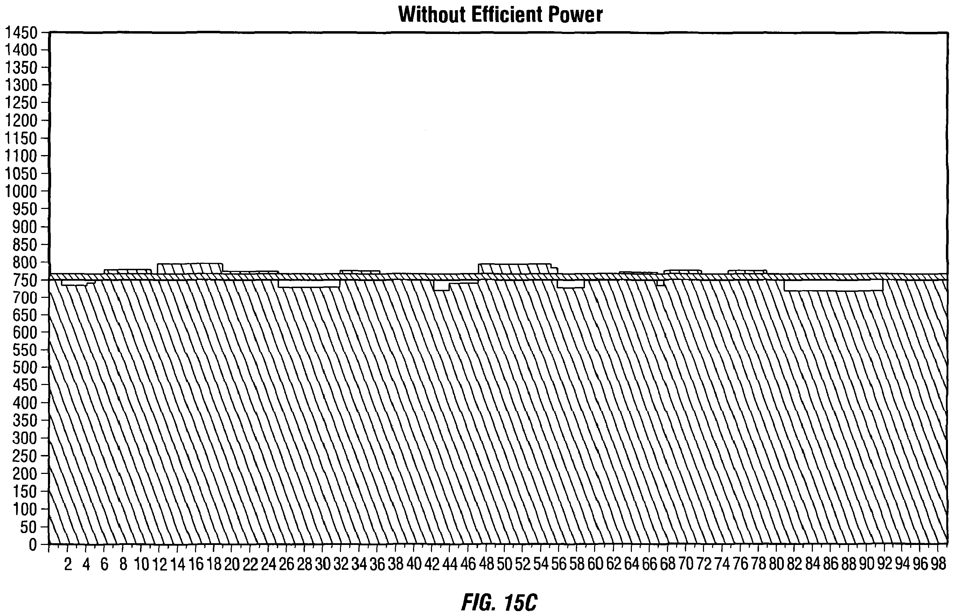

Each heating zone controlled by an SCR controller, is defined by an output power, cycle time and a maximum power (max capacity), which can be pictured as a rectangle. Rather than letting these rectangles pile up randomly, the PLM equipped controller uniformly distributes them thereby ensuring that at any given moment the overall power is as stable and balanced as possible. It is important to understand that the PLM function does not change the output power but rather balances and shifts the power evenly thereby eliminating any disturbance. The result is optimum load management through intelligent load balancing and load sharing, a strategy that will eliminate peaks and flicker and even the cut overall power usage. Refer to Fig. 15.

By using the PLM function, manufacturers are now able to use zero cross firing for their system without any drawbacks. Eliminating phase angle firing significantly improves the power factor which in turn results in substantial savings. Additionally, using energy more efficiently (i.e. substantially decreasing the reactive power (KVAR)) results in less power generated by the utility company. In fact, we should consider that consuming reactive power is in the end simply a waste of energy. While a bad power factor forces the utility company to generate this extra reactive power, it will be of absolutely no use to the end user. Besides saving costs, implementing a best practice of efficient energy consumption also results in considerably less $CO_2$ emissions released in the atmosphere. Load shedding: demand reduction and load control strategy - the shedding function allows limiting and shifting the overall energy consumption all together or with fully adjustable user-defined priorities. Adjustments can be made through fieldbus communication (Profibus, DeviceNet and Ethernet) enabling dynamic adjustments in view of current ON peak period surcharges. Increased quality of mains supply - while an efficient load strategy can result in substantial savings and an improved environment, using synchronized SCR's will drastically increase the quality of the main supply. As described above, eliminating phase angle will remove harmful harmonics and RFI generation, which for example could disturb the IT infrastructure or overheat transformers.

For companies already using full cycle firing, the PLM function can assist in achieving constant power balance without the flicker effect. Moreover, PLM can be of critical importance in installations where the overall installed power of the heating elements exceeds the capacity of the main transformer. In such cases non-synchronized firing may result in a total black out caused by tripped overloaded main circuit breakers. The PLM function will avoid heavy peaks of power that could overload the system by constantly monitoring and balancing the firing. Load sharing, based on predictive strategies, will allow a substantial cost savings for consumers. However, proper calculation of the savings can only be made when details of the rates and conditions of the supply chain are fully known. Table 1 illustrates an example of possible savings.

In addition, the possible savings in the price for the connection to the grid can be significant which can be realized using an EPower solution at the early design stage before the capacity of the connection has been determined. Many companies will have an energy manager or a specialized purchaser that knows the complexity of its company energy usage and associated costs. Both technical and purchasing personnel need to work together to find a valid technical solution to reduce energy consumption and $CO_2$ emissions without impact on production yield or quality. Thus improving the power factor, controlling the demand charge, and reducing peak consumption during ON peak times can result in substantial savings. In addition the PLM function helps to improve the quality of the main power supply and also ultimately reduce $CO_2$ emissions.

In some contexts, full cycle firing may also be called burst firing mode. SCR is Silicon control rectifier. RFI is Radio Frequency Interference.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope of the appended claims.

**Claims**

1. System for distribution of electrical energy to a load, comprising:

    a load tap changer to distribute electrical energy to the load, wherein the load tap changer is controllable for operation in either phase angle firing operation mode or full cycle firing operation mode;
    a memory storing an electrical energy distribution strategy; and
    a central unit that commands the load tap changer to change between phase angle firing operation mode and full cycle firing operation mode in accordance with the electrical energy distribution strategy.

2. System according to claim 1, wherein the load tap changer comprises a plurality of solid state switches by which the load tap changer is controllable for operation in either phase angle firing operation mode or full cycle firing operation mode.

3. System according to claim 2, wherein each of the switches comprises a pair of silicon controlled rectifiers connected in anti-parallel, and/or wherein the switches are operable for changing tap connectivity.

4. System according to any of the preceding claims, wherein the load tap changer comprises a water cooled transformer.

5. System according to any of the preceding claims, wherein the load comprises industrial heating devices.

6. System according to any one of claims 1 to 4, wherein the load comprises industrial glass heating devices.

7. System according to claim 6, wherein the industrial glass heating devices are at least one of a glass fibre manufacturing bushing, a glass bending apparatus, a tempering furnace, an autoclave, a float glass bath, a tin bath heating system, and an annealing lehr.

8. System according to any of the preceding claims, wherein the central unit commands the load tap changer to change between phase angle firing operation mode and full cycle firing operation mode based on determining an estimated power mains zero crossing time.

9. System according to claim 8, wherein determining the estimated zero crossing time is based on digital filtering a measurement of the power mains and interpolating to the zero crossing time and wherein the estimated power mains zero crossing time is determined twice per period of the power mains.

10. System for distribution of electrical power to a load, comprising:

    a load tap changer to distribute electrical power to the load, wherein the load tap changer is controllable for operation in either phase angle operation mode or full cycle firing operation mode;
    a memory storing a dynamic closed loop control strategy; and
    a central unit that receives a command input, receives feedback from the load, determines a command based on the command input and the feedback in accordance with the strategy stored in memory, and commands the load tap changer to change between phase angle firing operation mode and full cycle firing operation mode.

11. System according to any of the preceding claims, wherein the load tap changer is operable to source at least 300 Amps at 3 Volts to the load and/or wherein the load tap changer is operable to source at least 500 kW power to the load.

12. System according to any of the preceding claims, wherein the load tap changer comprises at least three taps.

13. System according to any of the preceding claims, wherein the control strategy comprises commanding the load tap changer to operate in phase angle firing mode during a warm up interval of the load and then commanding the load tap changer to operate in full cycle firing operation mode after the load has completed the warm up interval, or wherein the control strategy comprises commanding the load tap changer to operate in phase angle firing mode during a cool down interval of the load and then commanding the load tap changer to depower the load after the load has completed the cool down interval.

14. Method of distributing electrical power to a load, comprising:

> determining, by a central unit, a power to distribute to a load; and
> commanding, by the central unit, a load tap changer to change between a phase angle firing operation mode and a full cycle firing operation mode based on the temporal distribution of power, wherein the power is distributed to the load.

15. Method according to claim 14, wherein the load tap changer comprises a plurality of solid state switches to control tap connections.

**Patentansprüche**

1. System zur Verteilung von elektrischer Energie auf eine Last, umfassend:

> einen Laststufenschalter zum Verteilen von elektrischer Energie auf die Last, wobei der Laststufenschalter entweder in der Betriebsart der Phasenanschnittsteuerung oder in der Betriebsart der Vollzyklussteuerung für den Betrieb steuerbar ist;
> einen Speicher, der eine Strategie zur Verteilung der elektrischen Energie speichert; und
> eine Zentraleinheit, die den Laststufenschalter anweist, zwischen der Betriebsart der Phasenanschnittsteuerung und der Betriebsart der Vollzyklussteuerung in Übereinstimmung mit der Strategie zur Verteilung der elektrischen Energie zu wechseln.

2. System nach Anspruch 1, wobei der Laststufenschalter eine Mehrzahl von Festkörperschaltern umfasst, durch die der Laststufenschalter für den Betrieb entweder in der Betriebsart der Phasenanschnittsteuerung oder in der Betriebsart der Vollzyklussteuerung steuerbar ist.

3. System nach Anspruch 2, wobei jeder der Schalter ein Paar von siliziumgesteuerten Gleichrichtern umfasst, die antiparallel geschaltet sind, und/oder wobei die Schalter zum Ändern der Abgreifkonnektivität betreibbar sind.

4. System nach einem der vorhergehenden Ansprüche, wobei der Laststufenschalter einen wassergekühlten Transformator umfasst.

5. System nach einem der vorhergehenden Ansprüche, wobei die Last industrielle Heizeinrichtungen umfasst.

6. System nach einem der Ansprüche 1 bis 4, wobei die Last industrielle Glasheizeinrichtungen umfasst.

7. System nach Anspruch 6, wobei die industriellen Glasheizeinrichtungen mindestens eines der folgenden sind: eine Glasfaser-Herstellungsbuchse, eine Glasbiegevorrichtung, ein Anlassofen, ein Autoklav, ein Floatglasbad, ein Zinnbadheizsystem und ein Kühlofen.

8. System nach einem der vorhergehenden Ansprüche, wobei die Zentraleinheit den Laststufenschalter anweist, auf der Grundlage der Festlegung einer geschätzten Nulldurchgangszeit des Stromnetzes zwischen der Betriebsart der Phasenanschnittsteuerung und der Betriebsart der Vollzyklussteuerung zu wechseln.

9. System nach Anspruch 8, wobei das Festlegen der geschätzten Nulldurchgangszeit auf digitaler Filterung einer Messung des Stromnetzes und Interpolation auf die Nulldurchgangszeit beruht und wobei die geschätzte Nulldurchgangszeit des Stromnetzes zweimal pro Periode des Stromnetzes bestimmt wird.

10. System zur Verteilung der elektrischen Leistung auf eine Last, umfassend:

> einen Laststufenschalter zum Verteilen der elektrischen Leistung auf die Last, wobei der Laststufenschalter für den Betrieb entweder in der Betriebsart der Phasenanschnittsteuerung oder in der Betriebsart der Vollzyklussteuerung steuerbar ist;

einen Speicher, der eine Strategie für eine dynamische Regelung mit geschlossener Rückführung speichert; und

eine Zentraleinheit, die eine Anweisungseingabe empfängt, eine Rückmeldung von der Last empfängt, eine Anweisung auf der Grundlage der Anweisungseingabe und der Rückmeldung gemäß der im Speicher gespeicherten Strategie festlegt und den Laststufenschalter anweist, zwischen der Betriebsart der Phasenanschnittsteuerung und der Betriebsart der Vollzyklussteuerung zu wechseln.

11. System nach einem der vorhergehenden Ansprüche, wobei der Laststufenschalter betreibbar ist, um mindestens 300 Ampere bei 3 Volt an die Last abzugeben, und/oder wobei der Laststufenschalter betreibbar ist, um mindestens 500 kW Leistung an die Last abzugeben.

12. System nach einem der vorhergehenden Ansprüche, wobei der Laststufenschalter mindestens drei Abgriffe umfasst.

13. System nach einem der vorhergehenden Ansprüche, wobei die Steuerungsstrategie umfasst: das Anweisen des Laststufenschalters, während eines Aufwärmintervalls der Last im Phasenanschnittbetrieb zu arbeiten, und dann das Anweisen des Laststufenschalters, in der Betriebsart der Vollzyklussteuerung zu arbeiten, nachdem die Last das Aufwärmintervall beendet hat, oder wobei die Steuerungsstrategie umfasst: das Anweisen des Laststufenschalters, während eines Abkühlintervalls der Last im Phasenanschnittbetrieb zu arbeiten, und dann das Anweisen des Laststufenschalters, die Leistungsversorgung der Last zu reduzieren, nachdem die Last das Abkühlintervall beendet hat.

14. Verfahren zum Verteilen von elektrischer Leistung auf eine Last, umfassend:

Bestimmen einer Leistung zum Verteilen auf eine Last durch eine Zentraleinheit; und
Anweisen eines Laststufenschalters durch die Zentraleinheit, zwischen einer Betriebsart der Phasenanschnittsteuerung und einer Betriebsart der Vollzyklussteuerung auf der Grundlage der zeitlichen Verteilung der Leistung zu wechseln, wobei die Leistung auf die Last verteilt wird.

15. Verfahren nach Anspruch 14, wobei der Laststufenschalter eine Mehrzahl von Halbleiterschaltern zur Steuerung von Abgriffverbindungen umfasst.

**Revendications**

1. Système pour la distribution d'énergie électrique à une charge, comprenant :

un dispositif de changement de branchement de charge pour distribuer l'énergie électrique à la charge, dans lequel le dispositif de changement de branchement de charge est susceptible d'être commandé pour fonctionner soit dans le mode de fonctionnement à découpage de phase soit dans le mode de fonctionnement à plein cycle ;
une mémoire qui stocke une stratégie de distribution d'énergie électrique ; et
une unité centrale qui donne ordre au dispositif de changement de branchement de charge de changer entre le mode de fonctionnement à découpage de phase et le mode de fonctionnement à plein cycle, en accord avec la stratégie de distribution d'énergie électrique.

2. Système selon la revendication 1, dans lequel le dispositif de changement de branchement de charge comprend une pluralité de commutateurs à semi-conducteurs au moyen desquels le dispositif de changement de branchement de charge peut être commandé pour le fonctionnement soit dans le mode de fonctionnement à découpage de phase soit dans le mode de fonctionnement à plein cycle.

3. Système selon la revendication 2, dans lequel chacun des commutateurs comprend une paire de redresseurs commandés en silicium connectés de manière antiparallèle et/ou dans lequel les commutateurs sont susceptibles d'être actionnés pour changer la connectivité du branchement.

4. Système selon l'une quelconque des revendications précédentes, dans lequel le dispositif de changement de branchement de charge comprend un transformateur refroidi à l'eau.

5. Système selon l'une quelconque des revendications précédentes, dans lequel la charge comprend des dispositifs de chauffage industriels.

6. Système selon l'une quelconque des revendications 1 à 4, dans lequel la charge comprend des dispositifs de chauffage industriels pour le verre.

7. Système selon la revendication 6, dans lequel les dispositifs de chauffage industriels pour le verre sont au moins un manchon de fabrication de fibres de verre, un appareil de cintrage pour le verre, un four de trempe, un autoclave, un bain de verre flottant, un système de chauffage pour bain d'étain, et une arche de recuit.

**8.** Système selon l'une quelconque des revendications précédentes, dans lequel l'unité centrale donne ordre au dispositif de changement de branchement de charge de changer entre le mode de fonctionnement à découpage de phase et le mode de fonctionnement à cycle plein, sur la base de la détermination d'un temps estimé du passage à zéro de l'alimentation électrique.

**9.** Système selon la revendication 8, dans lequel la détermination du temps estimé du passage à zéro est basée sur un filtrage numérique d'une mesure de l'alimentation électrique et sur une interpolation du temps de passage à zéro, et dans lequel le temps estimé du passage à zéro de l'alimentation électrique est déterminé deux fois par période de l'alimentation électrique.

**10.** Système pour distribution d'énergie électrique à une charge, comprenant :

un dispositif de changement de branchement de charge pour distribuer une puissance électrique à la charge, dans lequel le dispositif de changement de branchement de charge est susceptible d'être commandé pour fonctionner soit dans un mode de fonctionnement à découpage de phase soit dans un mode de fonctionnement à plein cycle ;
une mémoire stockant une stratégie de commande dynamique en boucle fermée ; et
une unité centrale qui reçoit un ordre d'entrée, qui reçoit une rétroaction depuis la charge, qui détermine un ordre sur la base de l'ordre d'entrée et de la rétroaction en accord avec la stratégie stockée dans la mémoire, et qui donne ordre au dispositif de changement de branchement de charge de changer entre le mode de fonctionnement à découpage de phase et le mode de fonctionnement à plein cycle.

**11.** Système selon l'une quelconque des revendications précédentes, dans lequel le dispositif de changement de branchement de charge est capable de fonctionner pour alimenter au moins 300 A à 3 V à la charge et/ou dans lequel le dispositif de changement de branchement de charge est capable de fonctionner pour alimenter au moins 500 kilowatts d'énergie à la charge.

**12.** Système selon l'une quelconque des revendications précédentes, dans lequel le dispositif de changement de branchement de charge comprend au moins trois branchements.

**13.** Système selon l'une quelconque des revendications précédentes, dans lequel la stratégie de commande comprend l'envoi d'un ordre au dispositif de changement de branchement de charge pour fonctionner dans le mode de fonctionnement à découpage phase pendant un intervalle d'échauffement de la charge puis d'un ordre au dispositif de changement de branchement de charge pour fonctionner dans le mode de fonctionnement à plein cycle après que la charge a terminé l'intervalle d'échauffement, ou dans lequel la stratégie de commande comprend l'envoi d'un ordre au dispositif de changement de branchement de charge pour fonctionner dans le mode de fonctionnement à découpage de phase pendant un intervalle de refroidissement de la charge, puis d'un ordre au dispositif de changement de branchement de charge de couper l'énergie vers la charge après que la charge a terminé l'intervalle de refroidissement.

**14.** Procédé pour distribuer une énergie électrique charge, comprenant les étapes consistant à :

déterminer, par une unité centrale, une énergie distribuée à une charge ; et
envoyer l'ordre, par l'unité centrale, à un dispositif de changement de branchement de charge de changer entre un mode de fonctionnement à découpage de phase et un mode de fonctionnement à plein cycle sur la base de la distribution temporelle d'énergie, dans lequel l'énergie est distribuée à la charge.

**15.** Procédé selon la revendication 14, dans lequel le dispositif de changement de branchement de charge comprend une pluralité de commutateurs à semi-conducteurs pour commander des connexions de branchement.

**FIG. 1**

**FIG. 2A**

**FIG. 2B**

**FIG. 2C**

**FIG. 3**

**FIG. 4**

**FIG. 5**

**FIG. 6**

**FIG. 7**

FIG. 8B

FIG. 8A

**FIG. 9A**

EP 2 441 165 B1

**FIG. 9B**

EP 2 441 165 B1

$P_{max}$

$P_t$

2 4 6 8 10 12 14 16 18 20 22 24 26 28 30 32 34 36 38 40 42 44 46 48 50 52 54 56 58 60 62 64 66 68 70 72 74 76 78 80 82 84 86 88 90 92 94 96 98

3000 2900 2800 2700 2600 2500 2400 2300 2200 2100 2000 1900 1800 1700 1600 1500 1400 1300 1200 1100 1000 900 800 700 600 500 400 300 200 100 0

**FIG. 10A**

**FIG. 10B**

FIG. 11

LTC Thyrstor Application

25%

50%

66%

84%

100%

**PF/Irms**

*FIG. 12*

**FIG. 13**

FIG. 14

FIG. 15A

**Without Efficient Power (Non Synchronised)**

*FIG. 15B*

EP 2 441 165 B1

**Without Efficient Power**

*FIG. 15C*

EP 2 441 165 B1

**FIG. 16A**

EP 2 441 165 B1

(A)

Phase 2 detection

| Network 2 |
|---|
| 1PH(1) |
| Meas.Isq |
| Meas.Vsq |
| Meas.PBurst |
| Meas.P |

| Control 2 | |
|---|---|
| Main.PV | Diag.Status |
| Main.SP | Diag. Output |
| Limit.PV1 | Diag. PAOP |
| Limit.SP1 | |

| Modultr 2 | |
|---|---|
| BurstVar (1) | |
| In | Out |
| PUvn | |
| SwitchPA | |

IO.Digital 1.PV

| Firing DP2 | |
|---|---|
| Resistive (0) | |
| Enable | SafetyRampStatus |
| In | |
| PaLimitIn | |

Math 2.2.In1

Flip Flop PA
Wave train
Phase 2

| Network 2 |
|---|
| Meas. PBurst |

| Math 2.2 |
|---|
| Sub (2) |
| In 1 Out |
| In 2 |

| Lgc 8.2 |
|---|
| AND (1) |
| 2 |
| In 1 Out |
| In 2 |

Out=Off (0)

Entry
validation
conduction

| IO.Digital 1 |
|---|
| Ip Contact (I) |
| PV |

FiringOP 2.Enable

UsrVal 1.Val

**FIG. 16B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0910141 A
- US 5119012 A
- EP 1837984 A
- EP 0710051 A